# EUROPÄISCHE PATENTANMELDUNG

(11) **EP 3 620 771 A1**
(43) Veröffentlichungstag der Anmeldung: **11.03.2020**
(21) Anmeldenummer: 18192964.7
(22) Anmeldetag: 06.09.2018
(51) Int. Cl.: G01N 1/28, G01N 1/31, G01N 35/00

(54) **VORRICHTUNG ZUM AUSBRINGEN VON BLUT AUF EINEM SUBSTRAT**

(71) Anmelder: Siemens Healthcare Diagnostics Inc., Tarrytown, NY 10591 (US)
(72) Erfinder: MARQUARDT, Gaby, 91353 Hausen (DE); MÜLLER, Martin, 12103 Berlin (DE); LUDWIG, Jenny, 12103 Berlin (DE)
(74) Vertreter: Castorph, Simon Johannes

(57) **Zusammenfassung**

Die Erfindung betrifft eine Vorrichtung zum automatischen Ausbringen von Blut (1) einer Blutprobe auf einem Substrat (2) in einer homogenen Monolage (8), die Vorrichtung umfassend eine Düsenöffnung (4) zum Ausbringen des Bluts und eine Vorrichtung zum Transport (5) eines Substrats (2) unterhalb der Düsenöffnung (4), wobei der Abstand zwischen der Düsenöffnung (4) und einer zur Düsenöffnung (4) hin orientierten Oberfläche (6) des Substrates (2) konstant ist und wobei der Abstand zwischen 10 und 20 Micro Metern beträgt und wobei die Vorrichtung zum Transport (5) des Substrates (2) dazu ausgebildet ist, das Substrat (2) mit konstanter Geschwindigkeit unter der Düsenöffnung (4) hinweg zu bewegen.

## Beschreibung

Die Erfindung liegt auf dem Gebiet der automatischen Hämatologie-Analyzer und betrifft eine Vorrichtung zum automatischen Ausbringen von Blut einer Blutprobe auf einem Substrat in einer homogenen Monolage zum Analysieren von Zellen in einer Probe unter Verwendung einer Mikroskopiervorrichtung.

Zur automatisierten Analyse von Zellen werden so genannte "automated cell counters" (Automatisierte Zellzählgeräte) mit zunehmendem Erfolg angewendet. Beispiele hierfür sind das Advia 2120, das Sysmex XE-2100 sowie das Cobas m 511 Gerät. Diese automatisierten Geräte stellen, abgesehen von ihrer hohen Durchsatzzahl, einige Vorteile bereit, wie beispielsweise hohe Objektivität (keine Variabilität abhängig vom Beobachter), Elimination statistischer Variationen, die üblicherweise mit einer manuellen Zählung verbunden sind (Zählung hoher Zellzahlen), sowie die Bestimmung zahlreicher Parameter, die bei einer manuellen Auszählung nicht verfügbar wären und, wie angesprochen eine effizientere und kosteneffektivere Handhabung. Einige dieser Geräte können 120 bis 150 Patientenproben pro Stunde bearbeiten.

Die technischen Prinzipien der automatischen Einzelzellzählung im Advia 2120 und Sysmex XE-2100 System beruhen meist entweder auf einer Impedanz- (Widerstands-) Messung oder auf einem optischen System (Streulicht- bzw. Absorptionsmessung). Weiter sind bildgebende Systeme etabliert, die z.B. Zellen eines Blutausstrichs automatisiert abbilden und bewerten, wie z.B. in den Cobas m 511, CellaVision DM96 und CellaVision 1200 Systemen.

Beim Impedanzverfahren erfolgt die Zellzählung sowie deren Größenbestimmung auf Grundlage des Nachweises und der Messung von Veränderungen in der elektrischen Leitfähigkeit (Widerstand), die durch ein Teilchen verursacht werden, das sich durch eine kleine Öffnung hindurchbewegt. Teilchen, wie beispielsweise Blutzellen, sind selbst nicht leitend, werden jedoch in einem elektrisch leitenden Verdünnungsmittel suspendiert. Wenn eine derartige Suspension von Zellen durch eine Öffnung hindurchgeleitet wird, nimmt bei Durchgang einer einzelnen individuellen Zelle die Impedanz (Widerstand) des elektrischen Weges zwischen den beiden Elektroden, die sich auf jeder Seite der Öffnung befinden, vorübergehend zu.

Im Gegensatz zum Impedanzverfahren umfasst das optische Verfahren das Durchleiten eines Laserlichtstrahles oder eines LED Lichtstrahls durch eine verdünnte Blutprobe, die in einem kontinuierlichen Strom von dem Laserstrahl oder dem LED Lichtstrahl erfasst wird. Der entsprechende Lichtstrahl kann dabei z.B. mittels eines Lichtwellenleiters zur Durchflusszelle geleitet werden. Jede Zelle, die durch die Erfassungszone der Durchflusszelle hindurchtritt, streut das fokussierte Licht. Das gestreute Licht wird dann durch einen Fotodetektor nachgewiesen und in einen elektrischen Impuls umgewandelt. Die hier erzeugte Anzahl von Impulsen ist direkt zur Zellanzahl proportional, die durch die Erfassungszone in einer speziellen Zeitspanne hindurchtritt.

Bei den optischen Verfahren wird die Lichtstreuung der einzelnen Zelle, die durch die Erfassungszone hindurchtritt, in verschiedenen Winkeln gemessen. Hierdurch wird das Streuverhalten der jeweiligen Zelle für die optische Strahlung erfasst, das Rückschlüsse auf z.B. die Zellstruktur, Form und Reflexionsvermögen erlaubt. Dieses Streuverhalten kann dazu verwendet werden, verschiedene Arten von Blutzellen zu differenzieren und die abgeleiteten Parameter zur Diagnose von Abweichungen der Blutzellen dieser Probe von einer Norm, die z.B. aus einer Vielzahl von als normal klassifizierten Referenzproben gewonnen wurde, zu verwenden.

Für die Anfertigung von Blutausstrichen zur Differenzialdiagnostik wird bisher üblicherweise eine Blutprobe auf einem Glasobjektträger ausgestrichen und anschließen manuell oder automatisiert mikroskopisch ausgewertet.

Für die Anfertigung eines Blutaustrichs wird bisher üblicherweise zunächst ein kleiner Tropfen Blut im Abstand von etwa 1 cm am rechten Ende des Objektträgers aufgebracht. Anschließend wird ein zweiter Objektträger von links an den Blutstropfen heran geführt, bis sich der Blutstropfen an der Rückseite der Glaskante verteilt. Nun zieht man das Blut in entgegengesetzte Richtung ohne Druck von rechts nach links zügig und gleichmäßig über den ganzen Objektträger. Dadurch wird das Blut wie eine Schleppe ausgedünnt und die Blutzellen werden vereinzelt und können besser beurteilt werden. Bei dieser Methode hat der Blutausstrich typischerweise eine Breite von etwa 20 mm.

Automatisierte Systeme zum Ausbringen von Blut in einer Monolage bringen das Blut ebenfalls flächig über die gesamte Oberfläche des Objektträgers aus. Das Ausbringen kann dabei auch mittels einer meanderförmigen Bewegung erfolgen. Dabei lässt sich Blut aufgrund der hohen Anzahl an zellulären Bestandteilen nur schwer als gleichmäßige Monolage über eine längere Strecke ausbringen.

Herkömmliche Blutausstriche werden auf einer Fläche von etwa 20 mm mal 40 mm angefertigt. Dabei liegen die Zellen aber nur in einem Bestimmten Bereich als Monolage vor. Das Vorliegen der Zellen als Monolage ist jedoch entscheidend um eine gute Qualität der Analyse zu gewehrleisten. Beim Auswerten der Blutausstriche werden heute typischerweise 100 bis 200 weiße Blutzellen gezählt. Um diese Anzahl an Zellen auf dem Ausstrich im Bereich der Monolage zu finden wird der Objektträger daher meanderförmig abgescannt und analysiert. Derzeit dauert es 1 bis 3 Minuten, bis die 100 bis 200 Zellen automatisiert abgescannt und digitalisiert sind. Die Zellbilder werden von den Systemen vorklassifiziert und von medizinischem Fachpersonal überprüft und freigegeben. Eine Vollautomatisierte Bearbeitung der Proben ist derzeit nicht möglich.

Eine der Erfindung zugrundeliegende Aufgabe ist daher unter anderem das Bereitstellen einer verbesserten und vereinfachten Vorrichtung die es ermöglicht, Blut einer Blutprobe auf einem Substrat gleichmäßiger und in einer homogenen Monolage zuverlässiger automatisiert auszubringen um eine einwandfrei automatisierte mikroskopische Beurteilung des Differentialblutbildes und somit eine vollautomatisierte Bearbeitung der Proben zu ermöglichen.

Die Aufgabe wird erfindungsgemäß von den Gegenständen der unabhängigen Patentansprüche gelöst. Vorteilhafte Weiterbildungen der Erfindung sind insbesondere auch durch die Unteransprüche gegeben.

Die Erfindung geht von der Idee aus, dass sich durch die Verwendung einer speziellen Düse, die mit einem fest definierten Abstand zur Oberfläche des Objektträger positioniert wird und mit einer konstanten Geschwindigkeit relativ zur Oberfläche des Objektträgers bewegt wird eine gleichmäßige Verteilung von Blutzellen auf der auszubringenden Oberfläche erzeugen lässt.

Im Gegensatz zu herkömmlichen Ausstreichmethoden wird erfindungsgemäß bevorzugt nur ein dünnerer Streifen mit einer Breite von 3 bis 5 mm erzeugt, der aber über eine längere Strecke hinweg eine gleichmäßigere Verteilung mit einer homogenen Monolage aufweist.

Für die Ausbringung des Bluts als Monolage sind dabei der fest definierte Abstand zwischen der Düse und der Oberfläche des Objektträgers, eine konstante Geschwindigkeit der Probenabgabe aus der Düse sowie eine konstante relative Bewegung von Düse und Objektträger mit gleichbleibender Geschwindigkeit von besonderer Wichtigkeit.

Der Gegenstand der Erfindung umfasst insbesondere eine Vorrichtung zum automatischen Ausbringen von Blut einer Blutprobe auf einem Substrat in einer homogenen Monolage, die Vorrichtung umfassend eine Düsenöffnung zum Ausbringen des Bluts und eine Vorrichtung zum Transport eines Substrats unterhalb der Düsenöffnung, wobei der Abstand zwischen der Düsenöffnung und einer zur Düsenöffnung hin orientierten Oberfläche des Substrates konstant ist und wobei der Abstand zwischen 10 und 20 Micro Metern beträgt und wobei die Vorrichtung zum Transport des Substrates dazu ausgebildet ist, das Substrat mit konstanter Geschwindigkeit unter der Düsenöffnung hinweg zu bewegen.

Dies hat den Vorteil, dass sich eine gleichmäßigere Verteilung von Blutzellen auf der Oberfläche des Objektträgers erzeugen lässt. Insbesondere kann so über eine längere Strecke hinweg eine gleichmäßigere Verteilung mit einer homogenen Monolage erreicht werden.

Dadurch kann eine 5 bis 10-fache Erhöhung der Anzahl an aufgenommenen und digitalisierten Zellen erreicht werden. Dies führt bei gleichbleibender Bildanalyse zu einer 5 bis 10-fachen Erhöhung der Statistik und bildet damit die Grundlage für eine vollautomatisierte Bildanalyse der Zellen.

Bevorzugt weist die Düsenöffnung einen Innendurchmesser auf, wobei die Düsenöffnung eine Wandung mit einer Wandstärke umfasst und wobei das Verhältnis des Innendurchmessers zur Wandstärke kleiner oder gleich 1 zu 5, bevorzugt kleiner oder gleich 1 zu 2,5, besonders bevorzugt kleiner oder gleich 1 zu 2 ist. Besonders bevorzugt beträgt der Innendurchmesser 1 mm und die Wandstärke der Düse 0,25 mm.

Dies hat den Vorteil, dass die Düse ein vorteilhaftes Verhältnis bezüglich des Innendurchmessers der Düsenöffnung und der Wandstärke der Außenwand aufweist, das besonders wichtig ist um über eine längere Strecke hinweg eine gleichmäßigere Verteilung mit einer homogenen Monolage zu erreichen.

Bevorzugt umfasst die Vorrichtung weiter eine Spritze mit 25 Micro Litern Volumen, wobei die Ausbringung des Blutes vorteilhafterweise mittels der Spritze erfolgt. Dies hat den Vorteil, dass das Blut auf besonders einfache Weise erfindungsgemäß Ausgebracht werden kann.

In einer weiteren bevorzugten Ausgestaltung umfasst die Vorrichtung einen Schlauchstutzen mit Gewinde, wobei der Schlauchstutzen die Düsenöffnung umfasst und wobei der Schlauchstutzen bevorzugt einen Durchmesser von 1,6 mm aufweist. In einer bevorzugten Ausgestaltung besteht die Düsenöffnung aus Polypropylen.

Ein weiterer Gegenstand der Erfindung ist ein Verfahren zum automatischen Ausbringen von Blut einer Blutprobe auf einem Substrat in einer homogenen Monolage mittels einer erfindungsgemäßen Vorrichtung.

In einer bevorzugten Ausgestaltung des Verfahrens wird das Blut aus der Düsenöffnung mit einer konstanten Rate von 0,15 bis 0,35 Micro Liter pro Sekunde, bevorzugt von 0,25 Micro Litern pro Sekunde ausgebracht. In einer besonders bevorzugten Ausgestaltung des Verfahrens ist die konstante Rate der Ausbringung des Bluts aus der Düsenöffnung abhängig vom Wert des Hämatokrit der entsprechenden Probe.

In einer weiteren bevorzugten Ausgestaltung des Verfahrens beträgt die konstante Geschwindigkeit des Substrates mindestens 1,20 cm pro Sekunde und maximal 1,50cm pro Sekunde, bevorzugt 1,38 cm pro Sekunde.

In einer weiteren bevorzugten Ausgestaltung des Verfahrens wird das Blut in einer Linie auf dem Substrat ausgebracht, wobei die Linie bevorzugt eine Breite zwischen 3 und 5 mm aufweist. Bevorzugt handelt es sich bei der Linie um eine gerade Linie. Dies hat den Vorteil, dass Substrate mit Blutausstrichen nicht länger wie bisher meanderförmig abgescannt werden müssen sondern lediglich linear. Dadurch muss die Scaneinheit nur noch einachsig verfahren werden, wodurch diese stabiler und kostengünstiger ausgestaltet werden kann und gleichzeitig wesentlich schneller arbeiten kann. Die gleichmäßige lineare Ausbringung ermöglicht es mehr Zellen aufzunehmen und dadurch für die Auswertung eine größere Statistik zur Verfügung zu stellen. Des Weiteren wird durch eine komplette Digitalisierung der Probe die Wahrscheinlichkeit reduziert, seltene pathologische Zellen zu übersehen.

In einer weiteren bevorzugten Ausgestaltung des Verfahrens weist die Linie auf dem Substrat eine Länge von 50 bis 100 mm auf und wobei bevorzugt die Linie sich über die gesamte Länge des Substrats erstreckt. Dies ermöglicht es mit einem einzigen linearen Scan alle Zellen der Probe zu erfassen. Durch die Digitalisierung der kompletten Probe sinkt die Wahrscheinlichkeit, pathologische Zellen zu übersehen und eine Aufbewahrung der gefärbten Proben für etwaige Nachuntersuchungen ist nicht länger nötig und kann entfallen.

In einer bevorzugten Ausgestaltung der Vorrichtung oder des Verfahrens ist das Substrat im sichtbaren Spektralbereich transparent. Dies hat den Vorteil, dass die Probe in Durchlichtgeometrie besonders einfach in einem Mikroskop abgebildet werden kann.

In einer bevorzugten Ausgestaltung der Vorrichtung oder des Verfahrens besteht das Substrat aus Glas, Folie und/oder Kunststoff.

In einer bevorzugten Ausgestaltung der Vorrichtung oder des Verfahrens weist das Substrat eine hydrophile Oberfläche auf. Dies hat den Vorteil, dass sich das Blut besonders einfach gleichmäßig in einer Monolage auf die entsprechende Oberfläche aufbringen lässt.

Bevorzugt werden zum differenzieren mindestens 120 weiße Blutzellen in einer Monolage auf das Substrat ausgebracht, wobei für eine vollautomatische Differenzierung besonders bevorzugt 500 bis 1000 weiße Blutzellen ausgebracht werden.

In einer bevorzugten Ausgestaltung des Verfahrens wird das Blut der Blutprobe durch die Düsenöffnung aufgenommen und wobei unmittelbar nach Aufnahme des Bluts ein Luftzwischenraum von 2 Micro Litern Luft aufgenommen wird.

Ein weiterer Gegenstand der Erfindung ist eine Verwendung einer erfindungsgemäßen Vorrichtung und/oder eines erfindungsgemäßen Verfahrens in einem automatischen Analyzer, bevorzugt in einem automatischen Hämatologie-Analyzer.

Ein weiterer Gegenstand der Erfindung ist ein automatischer Analyzer umfassend eine erfindungsgemäße Vorrichtung.

Ein weiterer Gegenstand der Erfindung ist ein automatischer Analyzer umfassend Mittel zur automatischen Ausführung eines erfindungsgemäßen Verfahrens, wobei bevorzugt die Mittel eine Steuereinrichtung umfassen, die so konfiguriert ist, dass sie eine automatische Ausführung eines erfindungsgemäßen Verfahrens steuern kann.

Bevorzugt handelt es sich bei dem erfindungsgemäßen Analysator um einen automatischen Analysator, besonders bevorzugt um einen teilautomatischen oder vollautomatischen Hämatologie-Analysator. Bevorzugt umfasst der Analysator ein Mikroskop mit einer Kamera. Bevorzugt umfasst die Kamera ein digitales Aufzeichnungsgerät, das zum Aufnehmen des im Mikroskop abgebildeten Lichtfelds ausgebildet ist. Bevorzugt Umfasst das digitale Aufzeichnungsgerät einen charge-coupled device (CCD) Chip oder mehrere CCD Chips. Besonders bevorzugt basiert das digitale Aufzeichnungsgerät auf einer Complementary Metal-Oxide-Semiconductor (CMOS) Technik und/oder umfasst einen CMOS Chip.

Bei der Blutprobe handelt es sich bevorzugt um eine Blutprobe eines Menschen oder eines Tieres.

Die Begriffe Objektträger und Substrat werden synonym verwendet.

Die Erfindung wird anhand der beigefügten Zeichnung noch einmal durch ein konkretes Ausführungsbeispiel näher erläutert. Das gezeigte Beispiel stellt eine bevorzugte Ausführungsform der Erfindung dar. Es zeigt:

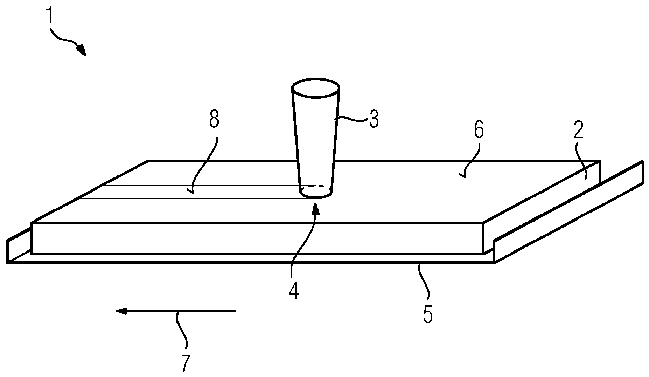

- FIG 1: eine schematische Darstellung einer Vorrichtung zum automatischen Ausbringen von Blut (1) einer Blutprobe auf einem Substrat (2) in einer homogenen Monolage (8).

Die in FIG 1 gezeigte Vorrichtung zum automatischen Ausbringen von Blut (1) einer Blutprobe auf einem Substrat (2) in einer homogenen Monolage (8) ist Teil eines automatischen Hämatologie-Analyzers. Die Vorrichtung zum Ausbringen von Blut (1) umfasst eine Düse (3) mit einer Düsenöffnung (4) sowie eine Vorrichtung zum Transport (5) eines Substrats (2). Das Substrat (2) weist eine hydrophile Oberfläche (6) auf, die in Richtung der Düsenöffnung (4) ausgerichtet ist. Der Abstand zwischen der Düsenöffnung (4) und der Oberfläche (6) des Substrats (2) beträgt 15 Micro Meter. Die Vorrichtung zum Transport (5) des Substrats (2) bewegt das Substrat (2) mit konstanter Geschwindigkeit unter der Düsenöffnung (4) hinweg. Die Bewegungsrichtung (7) des Substrats (2) ist durch den Pfeil angegeben. Unterhalb der Düsenöffnung (4) bildet sich eine homogene Monolage (8) mit Blutzellen der Blutprobe auf der Oberfläche (6) des Substrats (2) aus. Die Düsenöffnung (4) besteht aus Polypropylen und weist einen Innendurchmesser von 1 mm auf und die Wandstärke der Düsenöffnung (4) beträgt 0,25 mm. Die Vorrichtung (1) umfasst einen Schlauchstutzen mit Gewinde, wobei der Schlauchstutzen die Düsenöffnung (4) umfasst und wobei der Schlauchstutzen bevorzugt einen Durchmesser von 1,6 mm aufweist.

Das Blut der Blutprobe wird durch die Düsenöffnung (4) aufgenommen. Unmittelbar nach Aufnahme des Bluts wird ein Luftzwischenraum von 2 Micro Litern Luft aufgenommen. Das Blut wird aus der Düsenöffnung (4) mit einer konstanten Rate von 0,25 Micro Litern pro Sekunde ausgebracht. Die konstante Geschwindigkeit des Substrates (2) beträgt 1,38 cm pro Sekunde. Die Linie, in der das Blut auf das Substrat (2) aufgebracht wird hat eine Breite von 3 bis 5 mm. Die Linie auf dem Substrat (2) weist nach Abschluss der Ausbringung insgesamt eine Länge von 50 bis 100 mm auf und erstreckt sich über die gesamte Länge des Substrats (2). Das Substrat (2) ist im sichtbaren Spektralbereich transparent und besteht aus Glas, Kunststoff und/oder einer Folie.

### Bezugszeichenliste

- 1: Vorrichtung zum Ausbringen von Blut
- 2: Substrat
- 3: Düse
- 4: Düsenöffnung
- 5: Vorrichtung zum Transport
- 6: Oberfläche
- 7: Bewegungsrichtung
- 8: Monolage

## Patentansprüche

1. Vorrichtung zum automatischen Ausbringen von Blut (1) einer Blutprobe auf einem Substrat (2) in einer homogenen Monolage (8), die Vorrichtung umfassend eine Düsenöffnung (4) zum Ausbringen des Bluts und eine Vorrichtung zum Transport (5) eines Substrats (2) unterhalb der Düsenöffnung (4), wobei der Abstand zwischen der Düsenöffnung (4) und einer zur Düsenöffnung (4) hin orientierten Oberfläche (6) des Substrates (4) konstant ist und wobei der Abstand zwischen 10 und 20 Micro Metern beträgt und wobei die Vorrichtung zum Transport (5) des Substrates (4) dazu ausgebildet ist, das Substrat (4) mit konstanter Geschwindigkeit unter der Düsenöffnung (4) hinweg zu bewegen.

2. Vorrichtung nach Anspruch 1, wobei die Düsenöffnung (4) einen Innendurchmesser aufweist und wobei die Düsenöffnung (4) eine Wandung mit einer Wandstärke umfasst und wobei das Verhältnis des Innendurchmessers zur Wandstärke kleiner oder gleich 1 zu 5, bevorzugt kleiner oder gleich 1 zu 2,5, besonders bevorzugt kleiner oder gleich 1 zu 2 ist.

3. Vorrichtung nach einem der vorhergehenden Ansprüche, wobei die Düsenöffnung (4) aus Polypropylen besteht.

4. Vorrichtung nach einem der vorhergehenden Ansprüche, wobei die Vorrichtung einen Schlauchstutzen mit Gewinde umfasst, wobei der Schlauchstutzen die Düsenöffnung (4) umfasst und wobei der Schlauchstutzen bevorzugt einen Durchmesser von 1,6 mm aufweist.

5. Verfahren zum automatischen Ausbringen von Blut einer Blutprobe auf einem Substrat (2) in einer homogenen Monolage (8) mittels einer Vorrichtung nach einem der Ansprüche 1 bis 4.

6. Verfahren nach Anspruch 5, wobei das Blut aus der Düsenöffnung (4) mit einer konstanten Rate von 0,15 bis 0,35 Micro Liter pro Sekunde, bevorzugt von 0,25 Micro Litern pro Sekunde ausgebracht wird.

7. Verfahren nach einem der Ansprüche 5 und 6, wobei die konstante Geschwindigkeit des Substrates (2) mindestens 1,20 cm pro Sekunde und maximal 1,50cm pro Sekunde, bevorzugt 1,38 cm pro Sekunde beträgt.

8. Verfahren nach einem der Ansprüche 5 bis 7, wobei das Blut in einer Linie auf dem Substrat (2) ausgebracht wird, wobei die Linie bevorzugt eine Breite zwischen 3 und 5 mm aufweist.

9. Verfahren nach einem der Ansprüche 5 bis 8, wobei die Linie auf dem Substrat (2) eine Länge von 50 bis 100 mm aufweist und wobei bevorzugt die Linie sich über die gesamte Länge des Substrats (2) erstreckt.

10. Verfahren nach einem der Ansprüche 5 bis 9, wobei das Substrat (2) im sichtbaren Spektralbereich transparent ist.

11. Verfahren nach einem der Ansprüche 5 bis 10, wobei das Substrat (2) aus Glas, Folie und/oder Kunststoff besteht.

12. Verfahren nach einem der Ansprüche 5 bis 11, wobei das Substrat (2) eine hydrophile Oberfläche (6) aufweist.

13. Automatischer Analyzer umfassend eine Vorrichtung nach einem der Ansprüche 1 bis 4.

14. Verwendung einer Vorrichtung nach einem der Ansprüche 1 bis 4 und/oder eines Verfahrens nach einem der Ansprüche 5 bis 12 in einem automatischen Analyzer.
